# EUROPÄISCHE PATENTANMELDUNG

(11) **EP 0 752 725 A2**
(43) Veröffentlichungstag der Anmeldung: **08.01.1997**
(21) Anmeldenummer: 96109675.7
(22) Anmeldetag: 17.06.1996
(51) Int. Cl.: H01M 2/30

(54) **Schutzumhüllung für die Verschraubung der Polanschlussklemmen von Bleiakkumulatoren**

(30) Priorität: 04.07.1995 DE 29510817 U
(71) Anmelder: Welcker, Friedrich, D-58119 Hagen (DE)
(72) Erfinder: Welcker, Friedrich, D-58119 Hagen (DE)
(74) Vertreter: Beckmann, Gerhard

(57) **Zusammenfassung**

Zum Schutz für die Verschraubung der Polanschlußklemmen von Bleiakkumulatoren gegen Verunreinigungen und Korrosion sind die abgeflachten Klemmfahnen der Zellenverbinder- und Polanschlußkabel jeweils mit einer Umspritzung aus elastischem Isoliermaterial versehen, welche den Rundkopf einer in die Bohrung der Klemmfahne eingesetzten Anschlußschraube halternd umfaßt und zugleich einen ihr über ein Stegband flexibel angeformten Abdeckstöpsel zum lösbaren Eingriff in den Innensechskant zur Betätigung der Anschlußschraube bildet.

## Beschreibung

Die Erfindung bezieht sich auf eine Anordnung zum Korrosionsschutz an Bleiakkumulatoren in Form einer Schutzumhüllung für die Verschraubung der einzelnen Polanschlußklemmen.

Zu diesem Zweck ist bereits vorgesehen worden, die jeweils an den Enden eines Zellenverbinder- oder Polanschlußkabels vorhandenen Metallhülsen zur Verschraubung auf dem Anschlußpol des Akkumulators im Anschluß an die Ummantelung des Kabels und mit Ausnahme einer ringförmigen Kontaktfläche zu beiden Seiten um die Bohrung für den Durchgriff der Polschraube mit einer Isoliermasse aus Gummi oder Kunststoff zu umhüllen und auch den Sechskantkopf der Polschraube für sich mit einer entsprechenden Kappe zu versehen (DE-U-82 35 503, 83 09 543).

Diese bekannte Methode ist aufwendig in der Herstellung wie umständlich in der praktischen Handhabung.

Aufgrund dessen liegt der Erfindung die Aufgabe zugrunde, eine Schutzumhüllung für die Verschraubung an den Polanschlußklemmen zu entwickeln, die sich ebenso einfach fertigen wie sachgerecht benutzen läßt.

Die Aufgabe wird gemäß der Erfindung bei einer Schutzumhüllung nach dem Oberbegriff des Patentanspruchs dadurch gelöst, daß die den abisolierten Drahtkörper des Polanschluß- oder Zellenverbinderkabels abgeflacht in sich einpressende Klemmfahne mit einer Umspritzung aus elastischem Isoliermaterial versehen wird, welche den Rundkopf der zuvor beweglich in die Bohrung der Klemmfahne eingesetzten Anschlußschraube an dessen Außenumfang formschlüssig umfaßt und zur gleichen Zeit über dem Rundkopf einen Abdeckstöpsel bildet, der durch ein Stegband mit der Umspritzung verbunden ist und selbsthalternd in den Innensechskant zur Betätigung der Anschlußschraube eingreift.

Mit dieser Ausführung wird auf vorteilhafte Weise erreicht, daß sich im Zuge der Umspritzung einer Klemmfahne die benötigte Anschlußschraube sowohl kontaktschlüssig, wie ausreichend beweglich und unverlierbar an derselben haltern läßt und sich zugleich ein mit dem Schraubenkopf und dessen Innensechskant korrespondierendes Anhängsel gebildet hat, mit welchem die Verschraubungsstelle säurefest und korrosionssicher abzudichten ist, um jedoch - falls erforderlich - zur Schraubbetätigung wie für elektrische Prüfzwecke zugänglich zu bleiben. Auf diese Weise wird nicht nur die bisher übliche Vorkehrung vermieden, die Hemmung gegen unbeabsichtigtes Lösen der Verschraubung aufwendigerweise durch einen in den Gewindegang der Polschraube hineinreichenden Kunststoffeinsatz zu gewährleisten; gleicherweise erübrigt sich nämlich auch die bisher innerhalb einer Kunststoffummantelung des Sechskantkopfes der Polschraube vorgesehene Kontaktierungsstelle zum Ansetzen der Prüfspitze eines elektrischen Meßinstruments.

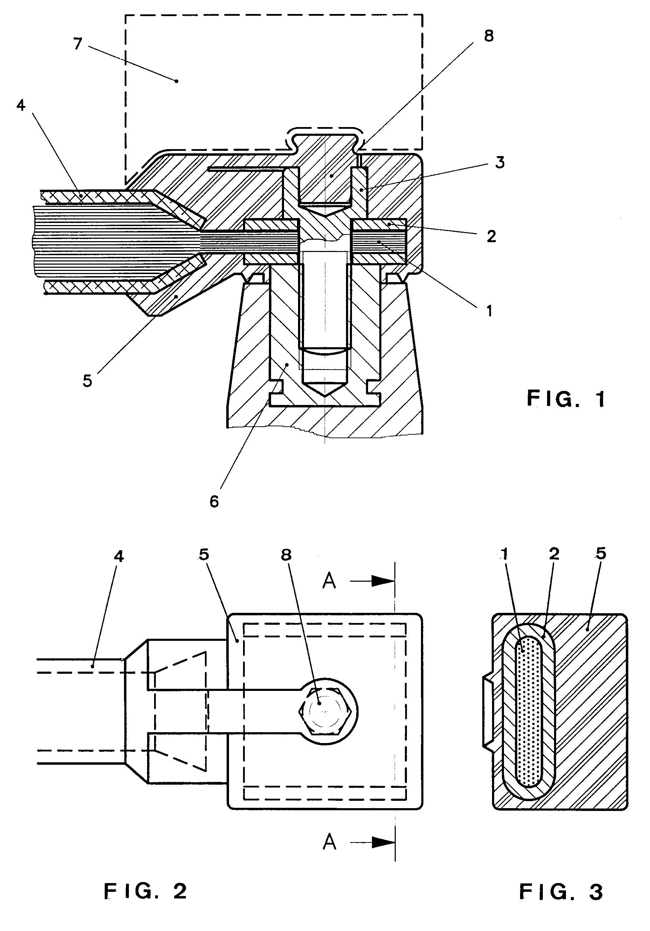

In der anliegenden Zeichnung ist als Ausführungsbeispiel der Erfindung eine Polanschlußklemmenverschraubung gemäß Fig. 1 im Querschnitt, gemäß Fig. 2 in der Draufsicht und gemäß Fig. 3 in einer (offenen) Seitenansicht dargestellt.

Wie aus der Darstellung ersichtlich, ist der Drahtkörper 1 des abisolierten Anschlußkabels in eine dabei abgeflachte Klemmfahne 2 eingepreßt und diese zum Durchgriff der Kopfschraube 3 mit einer Bohrung versehen. Zusammen mit der in diese Bohrung eingesteckten Kopfschraube 3 wird die Klemmfahne 2 in eine Spritzgußform eingelegt und unter Anschluß an die Schutzummantelung 4 des Kabels allseitig mit einer Kunststoffumhüllung 5 versehen.

Dabei bewirkt eine den Schraubenschaft in sich aufnehmende Hülse im Spritzwerkzeug entsprechend der in den Bleianschlußpol der Batterie eingegossenen Gewindebuchse 6 unterseitig die Bildung bzw. Aussparung der ringförmigen Kontaktfläche mit dem Anschlußpol, wogegen oberseitig die Kopfschraube 3 vollkommen umspritzt wird. Hierbei legt sich die Isoliermasse seitlich an den Außenumfang des Schraubenkopfes an, um diesen bewegbar zu haltern, und dringt von oben her in dessen Innensechskant ein. Dabei bewirkt wiederum eine zweite Hülse 7 im Oberteil des Spritzwerkzeugs, daß sich räumlich über dem Innensechskant im Schraubenkopf eine, wie dargestellt, möglicherweise auch mit einer stöpselartigen Handhabe versehene Abdeckung 8 bildet, die mit der Umhüllung 5 der klemmfahne 2 über ein dünneres Stegband verbunden bleibt. Hierzu ist auf der Stirnfläche des Schraubenkopfes rings um den Innensechskant innerhalb der Abdeckschicht eine Art Perforation gebildet worden, welche ein erstmaliges Abreißen und danach ein dichtendes Wiedereinstöpseln der Abdeckung 8 in den Innensechskant der Kopfschraube 3 erlaubt.

In dieser Beziehung ist es außerdem möglich, den über das Stegband mit der Kunststoffumhüllung 5 verbundenen Abdeckstöpsel 8 durch eine entsprechende Ausbildung des Spritzwerkzeugs seitwärts oder nach oben hin abstehend anzuformen, um diesen nach dem Einsetzen und Betätigen der Kopfschraube 3 flexibel umzufalten sowie selbsthaltend in deren Innensechskant einzudrücken. Diese Variante erfordert zwar ein komplizierter angelegtes Spritzwerkzeug, sie erspart dagegen die Perforierungsmaßnahme und die notwendige Einbeziehung der Kopfschraube 3 in den Fertigungsprozeß.

Auf diese Weise ergibt sich die vorteilhafte Möglichkeit, eine Polklemmenanschlußverschraubung für Bleiakkumulatoren mit relativ geringem Aufwand herzustellen wie im Gebrauch einfach betätigen zu können und im Ergebnis weithin korrosionssicher auszuführen.

## Patentansprüche

1. Schutzumhüllung für die Verschraubung der Polanschlußklemmen von Bleiakkumulatoren, gekennzeichnet durch eine Umspritzung (5) aus elastischem Isoliermaterial für die den abisolierten Drahtkörper (1) des Polanschluß- oder Zellenverbinderkabels abgeflacht in sich einpressende Klemmfahne (2), wobei die Umspritzung (5) den Rundkopf der vormontiert in die Bohrung der Klemmfahne (2) eingesetzten Anschlußschraube (3) außenseitig formschlüssig umfaßt und oberseitig einen ihr über ein Stegband angeformten Abdeckstöpsel (8) zum halternden Eingriff in den Innensechskant zur Betätigung der Anschlußschraube (3) aufweist.
